# EUROPÄISCHE PATENTSCHRIFT

(11) **EP 1 013 569 B1**
(45) Veröffentlichungstag und Bekanntmachung des Hinweises auf die Patenterteilung: **06.06.2001**
(21) Anmeldenummer: 99124773.5
(22) Anmeldetag: 13.12.1999
(51) Int. Cl.: B65G 9/00

(54) **Transportrolle für Förderbahnen in Anlagen zum Transport von Objekten**
Transport roller for use on conveying paths in installations for conveying items
Rouleau de transport utilisé sur des voies de convoyage dans des installations pour transporter des objets

(30) Priorität: 22.12.1998 DE 19859457
(43) Veröffentlichungstag der Anmeldung: 28.06.2000
(73) Patentinhaber: Gärtner, Franz, 97656 Oberelsbach (DE)
(72) Erfinder: Gärtner, Franz, 97656 Oberelsbach (DE)
(74) Vertreter: Solf, Alexander, Dr.

(56) Entgegenhaltungen:
- DE-A- 2 100 983
- DE-C- 488 034
- DE-U- 29 713 127
- GB-A- 393 781
- GB-A- 975 269
- US-A- 1 747 388

## Beschreibung

Die Erfindung betrifft eine Transportrolle für Förderbahnen in Anlagen zum Transport von Objekten, insbesondere von Kleidungsstücken, enthaltend zwei parallel zueinander gerichtet beabstandete, stirnseitige Flansche und ein zwischenliegendes Mittelteil sowie eine zwischen den Flanschen und dem Mittelteil mittig hindurchführende Durchgangsöffnung.

Eine derartige Transportrolle ist in der EPA 0 220 380 A2 beschrieben und besteht im wesentlichen aus einem einstückigen Rollenteil und aus einem Kodierungsteil. Voraussetzung für den Einsatz ist, daß sowohl das Rollenteil als auch das Kodierungsteil dem Tägerelement fest zugeordnet sind, wobei das Rollenteil als Ganzteil auf der Förderbahn rollt. Während das Kodierungsteil während des Betriebs immmer die gleiche Position zum zugehörigen Trägerelement und somit für mindestens eine in der Förderanlage vorhandene Leseeinrichtung gleichpositionierte Kodierinformationen aufweist, bewegt sich das einstückige Rollenteil, das aus den zwei parallel zueinander gerichteten Flanschen und aus dem beide Flanschen starr verbindenden Mittelteil besteht, auf mindestens einer Förderbahn, wie sie insbesonderere in Produktionsstätten und in Verteilungsanlagen in Lagerbereichen und größeren Kaufhäusern dem Kleidungsbereich zugeordnet werden können.
Der dem zum Kleidungsstück abgebogenen Trägerelement stirnseitig zugewendete Flansch stellt eine Vollscheibe dar, während der dem Trägerelement stirnseitig abgewendete Flansch eine stirnseitige, zylindrische Aussparung aufweist, in die das scheibenartige Kodierungsteil eingepaßt werden kann, wobei das Kodierungsteil mit seinem an ihm angebundenen, durch die mittige Durchgangsöffung des Rollenteils hindurchgehenden, durchmesserangepaßten Hülsenteil mit einem Splint andernseitig vor dem Vollscheibenflansch am Trägerelement starr gehaltert ist. Die Ausbildung und Zuordnung der Transportrolle stellt dabei einen hohen Aufwand an präziser mechanischer Bearbeitung dar. Andererseits ist das Bremsverhalten im Bereich zwischen der Durchgangsöffnungsinnenfläche und der Hülsenteilaußenfläche sowie im Berührungsbereich zwischen Splint und der Stirnseite des Vollscheibenflansches derart groß, daß es unter Umständen zu unerwünschten Reibungen bei den Fördervorgängen kommt. Außerdem ist die innere Schmierung zwischen den sich reibenden Flächen ein aufwendiges Abdichtungsproblem.

Das Mittelteil besteht aus jeweils an den Flanschen angebundenen durchmesserkleineren Wangen und einem die Wangen miteinander verbindenden Zwischenstück, wobei die Wangen jeweils eine zur Mittelachse gerichtet geneigte Schrägfläche besitzen. Die Transportrolle liegt mit den Schrägflächen auf der Förderbahn bei nach unten hängendem Trägerelement auf. Die beiden stirnseitigen rotierenden Scheibenflansche können zusätzlich als Seitenführungen bei Bewegung der Transportrollen auf der Förderbahn dienen.

In der Regel befinden sich auf den Förderbahnen eine große Anzahl von Transportrollen, denen jeweils ein Trägerelement definiert und somit das zu transportierende Kleidungsstück zugeordnet sind, das zu den kodedefinierten Arbeitsplätzen oder Verkaufsbereichen transportiert werden soll.

Eine weitere Transportrolle ist aus der EPA 0 203 290 A2 bekannt. Dort ist die Transportrolle einstückig und besteht ebenfalls aus zwei stirnseitigen Flanschen sowie aus einem zwischenliegenden Mittelteil, das aus einem Zwischenstück und aus zwei jeweils den Flanschen zugeordneten und dort angebundenen durchmesserkleineren Wangen besteht. Der Mittelachse ist eine koaxiale Öffnung bzw. eine Durchgangsöffnung zugeordnet, in der das Trägerelement angepaßt eingesetzt ist. An dem dem hängenden Trägerelement abgewendeten Scheibenflansch sind Kodiereinrichtungen vorhanden, die mit dem Flansch rotieren und z.B. aus Zählkodierelementen bestehen. Beim Vorbeibewegen der Kodierelemente an den zugehörigen Leseeinrichtungen können die Informationen gelesen werden.

Ein Problem besteht darin, daß auch hier die Trägerelemente oder Haken der Kodierung an dem Kodierflansch kodierbedingt fest zugeordnet sind, damit keine Fehlleitungen auf den Förderbahnen eintreten können.

Eine andere bekannte Transportrolle ist in der DE-OS 1 781 310 beschrieben, in der wie in der oben zuerst genannten, bekannten Transportrolle sowohl ein ganzheitliches Rollenteil als auch ein in und/oder an den Flansch angepaßtes, nichtrotierendes Kodierungsteil vorhanden sind. Das Kodierungsteil ist mit dem Trägerelement fest verbunden und weist eine vorzugsweise über die Flanschstirnseite überstehende Tastatur auf, die manuell betätigbar ist und durch die je nach Standort der Transportrolle in der Förderanlage die Kodierung geändert werden kann. Das Mittelteil ist starr mit den durchmesserkleineren Wangen und den Flanschen verbunden. Auch hier rollt die Transportrolle mit ihren Wangen auf der Förderbahn, ohne das Zwischenstück zu berühren. Die beiden wangengebundenen Scheibenflansche stellen zusätzliche Seitenführungen dar.

Ein Problem besteht für alle bekannten Transportrollen darin, daß z.B in einem Stau zweier oder mehrerer Transportrollen die jeweils zugehörigen Flansche nach dem Aufprall in Kontakt kommen. Da im berührenden Kontaktbereich die Transportrollen beim Wiederanrollen gegenläufige Rotationsbewegungen ausführen, entsteht dort Reibung, die sich je nach Anzahl der gestauten Rollen addiert, wobei unter ungünstigen Umständen Transportrollen sich gegenseitig von der Förderbahn heben können. Das gegenseitige Ab-/Ausheben, auch als Klettereffekt bezeichnet, kann zum Abkippen mindestens einer der Transportrollen von der Förderbahn oder gegebenenfalls zu einer festhakenden Überlagerung der einen Tränsportrolle über die benachbarte führen, was sich zu einer umfangreichen Störung im gesamten Transportablauf der Förderanlage ausweiten kann.

Allen bekannten Transportrollen ist auch gemeinsam, daß die Trägerelemente spezielle Ausbildungen haben, die auf die jeweilige Transportrolle zugeschnitten sind. Durch die Anpassungen ist erstens der Herstellungsaufwand der Einzelteile und zweitens auch deren Montage mit hohem Aufwand verbunden.

Der Erfindung liegt deshalb die Aufgabe zugrunde, eine Transportrolle für Förderbahnen anzugeben, die geeignet ausgebildet ist, daß im Stau von mindestens zwei Transportrollen der auftretende Klettereffekt vermieden sowie ein kompatibler Einsatz der Transportrolle auf allen Förderanlagen sichergstellt werden kann.

Die Aufgabe wird durch die Merkmale des Anspruchs 1 gelöst. In der Transportrolle weist gemäß dem Oberbegriff des Anspruchs 1 das Mittelteil mindestens ein periphäres, ringförmiges Umfangsteil auf, das separat von beiden Flanschen rotationsfähig ist, wobei beide Flansche untereinander und mit dem Umfangsteil derart in Verbindung stehen, daß sich bei einer förderbahnauflagebedingten Rotation des Umfangsteils beide Flansche in einem von der Rotation unabhängigen Ruhezustand befinden.

Das Mittelteil weist mindestens einen zum anderen Flansch gerichteten, einseitig verlängerten Ringsteg mindestens eines der beiden Flansche mit einem zur Durchgangsöffnung einheitlichen Durchmesser auf, wobei das ringförmige Umfangsteil wälzlagergestützt den Ringsteg umfaßt.

Die stirnseitigen Flansche sind derart ausgebildet, daß sie das ringförmige Umfangsteil durch jeweils mindestens einen stoßbezogenen Teilbereich und mindestens einen förderbahnzugeordneten Teilbereich in den Abmessungen überragen.

Die Flanschen sind vorzugsweise scheibenartig und überragen dabei rundum das Umfangsteil.

In der Durchgangsöffnung kann sich wahlweise ein zylinderartiges Halterungsteil befinden, das die beiden Flansche und das Mittelteil zusammenhält.

Das sich in der Durchgangsöffnung befindliche Halterungsteil ist vorzugsweise eine zylindrische Buchse mit einer Mindestlänge, die etwa der Länge der Durchgangsöffnung entspricht, deren freien Endbereiche zur halternden Vernietung der Flansche und des Mittelteils jeweils seitlich gebogen sind.

Der Ringsteg kann von seiner Anbindung an einem der beiden Flansche jeweils bis zu seinem freien, zur Mittelachse senkrecht abgeplatteten Endbereich außenflächig in Richtung zur Mittelachse geneigt sein.

Die Außenfläche des Ringstegs stellt zugleich die Innenlauffläche für die Wälzkörper eines Wälzlagers dar.

Die Innenlauffläche besitzt etwa mittig zwischen den Innenflächen der Flansche und senkrecht zur Mittelachse gerichtet vorzugsweise eine umlaufende rillenförmige Vertiefung, die maßgerecht den Oberflächen der Wälzkörper angepaßt ist und in der sich die Wälzkörper bewegen können.

Das ringförmige rotationsfähige Umfangsteil umschließt in Form eines Außenrings die Wälzkörper außenseitig.

Der Außenring umschließt von der Innenlauffläche aus radial beabstandet mit einer an ihm einseitig abgewinkelten scheibenartigen Seitenwandung die Wälzkörper, wobei sich die Seitenwandung aus Montagegründen auf der zum zweiten Flansch gerichteten Seite befindet.

Der Außenring besitzt an seiner paraxialen Innenfläche wie der Ringsteg eine senkrecht zur Mittelachse gerichtete, umlaufende rillenförmige Vertiefung, die ebenfalls den Oberflächen der Wälzkörper maßgerecht angepaßt ist.

Zur Seite des größeren Ringstegdurchmessers bzw. zum ersten Flansch gerichtet kann der Außenring insbesondere aus Montagegründen offen ausgebildet sein.

Zwischen dem Außenring und den Innenflächen des ersten und des zweiten Flansches ist jeweils ein schlitzbedingtes geringfügiges Spiel zur Verbesserung der Laufeigenschaften vorhanden.

Gegen den freien abgeplatteten Endbereich des Ringsteges ist der zweite scheibenförmige Flansch durch das Halterungsteil fest gehaltert, wobei das hohlzylindrische Halterungsteil durch die starre Vernietung den zweiten Flansch an den abgeplatteten Endbereich preßt. In das einen Kanal aufweisende Halterungsteil ist ein Haken eines Kleiderbügels einhängbar.

Ein Zusammenhalt der beiden Flansche kann auch durch eine Verrastung von in beiden Flanschen vorhandenen, korrespondierenden Rastelementen erfolgen.

Der Ringsteg kann dabei durch mehrere an ihm angeformte, angebundene, paraxial gerichtete und Rastelemente darstellende Einfügearme verlängert sein, an deren freien Ende jeweils radial gerichtete Rastnasen ausgebildet sind, wobei in dem zweiten Flansch den Maßen der Einfügearme angepaßte durchgängige und radial nach außen gerichtet abgestufte Rastausnehmungen derart vorhanden sind, daß bei der Montage des zweiten Flansches an dem freien Endbereich des Ringsteges die Rastnasen jeweils in die zugehörigen abgestuften Rastausnehmungen einrasten und den zweiten Flansch an dem Endbereich des ersten Flansches festhalten.

Die feste Verbindung zwischen den beiden Flanschen kann desweiteren andernfalls durch Verschraubung mittels eines außengewindebesitzenden Ringstegs und eines innengewindebesitzenden zweiten Flanschs erreicht werden.

Im Bereich der Laufflächen der Wälzkörper bzw. Kugeln kann zwischen den rillenartigen Vertiefungen eine Luftkühlung vorhanden sein, die durch das offene Wälzlager (Kugellager) gegeben ist.

Für die Flansche kann Kunststoff, für das rotationsfähige Umfangsteil kann metallisches Material eingesetzt werden. Die Wälzkörper können vorzugsweise als Metallkugeln ausgebildet.

Die rillenförmigen Vertiefungen des Ringsteges und/oder des Außenrings können mit mindestens einem laufverbessernden Material versehen, insbesondere gespritzt sein.

Zur Verbesserung der Zuordnung in den Förderanlagen kann mindestens einer der Flansche mindestens eine Kodiereinrichtung enthalten, die im und/oder am Flansch befestigt sein kann.

Dabei können die Flansche lochartige Aussparungen besitzen, in denen die Kodiereinrichtungen befestigt sind.

Die Aussparungen an mindestens einem der Flansche können auch eine Ringnut darstellen, in und/oder an der die Kodiereinrichtungen befestigt sind.

Die Kodiereinrichtungen können radial gerichtete und/oder kreisförmig angeordnete induktive, magnetische und/oder kapazitive Einrichtungen und/oder Stifte eines sich vom Flanschmaterial unterscheidenden Materials oder auch Strichkodes sein.

Die Kodiereinrichtungen können desweiteren auch als elektrische Bauelemente mit angeschlossenen ROM- und/oder RAM-Speichermodulen ausgebildet sein.

An beiden Flanschen können je nach Bedarf die Kodiereinrichtungen entweder symmetrisch im Aufbau und in Ausbildung und/oder sich signaltechnisch ergänzend vorhanden sein.

Die Förderbahn kann als endlose Rundstahl- oder Kunststoffgestänge bzw. Rohrgestänge oder als endlose Rundriemenanordnung ausgebildet sein.

Das Trägerelement ist vorzugsweise ein herkömmlicher gebogener Haken eines Bügels oder eines Hängeteils für Kleidungsstücke.

Die Erfindung wird anhand eines Ausführungsbeispiels mittels mehrerer Zeichnungen näher erläutert.

Es zeigen:
- Fig. 1: eine schematische perspektivische Darstellung der erfindungsgemäßen Transportrolle auf einer Förderbahn mit eingehaktem, auswechselbarem Trägerelement,
- Fig. 2: eine Vorderansicht der erfindungsgemäßen Transportrolle quer zur Förderbahn,
- Fig. 3: einen Querschnitt durch die Transportrolle längs der Linie I-I nach Fig. 1 ohne Trägerelement, Förderbahn und Strichkodierung, aber mit Aussparungen und einem Halterungsteil und
- Fig. 4: einen Querschnitt nach Fig. 3 unter Verwendung von korrespondierenden Rasterelementen anstelle eines vernietbaren Halterungsteils zum Zusammenhalt der beiden Flansche.

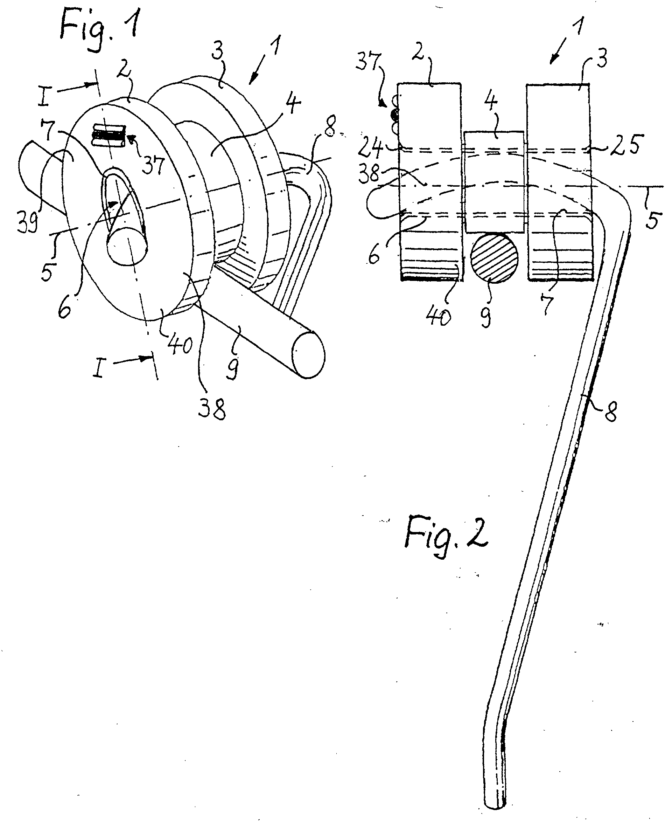

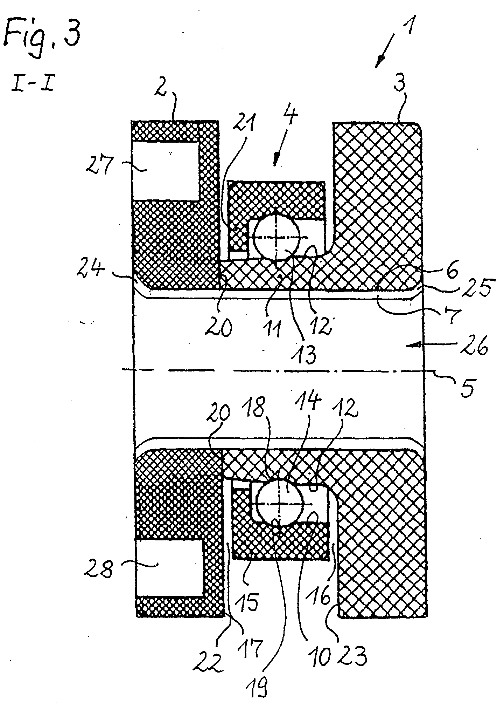

In den Figuren 1 bis 4 werden für gleiche Teile mit gleichen Funktionen die Bezugszeichen durchgängig beibehalten.

In den Fig. 1,2 besteht die erfindungsgemäße Transportrolle 1 im wesentlichen aus zwei parallel zueinander gerichteten, jeweils stirnseitigen scheibenartigen äußeren Flanschen 2,3 und aus einem zwischenliegenden Mittelteil 4. Längs der zugehörigen Mittelachse 5 ist eine Durchgangsöffnung 6 vorhanden, in der sich wahlweise ein Halterungsteil 7 befindet. Die Transportrolle 1 steht über ihre Durchgangsöffnung 6 mit einem bogenförmigen Trägerelement 8 in Verbindung. Dazu liegt das Mittelteil 4 auf einer Förderbahn 9 auf, bei deren vorhandener Neigung eine Bewegung der Transportrolle 1 möglich ist.

Die Förderbahnen 9 können jeweils als endlose Rundstahl- oder Kunststoffgestänge bzw. Rohrgestänge oder als endlose Rundriemen ausgebildet sein.

In Fig. 2 ist das Trägerelement 8 ein herkömmlicher gebogener Haken eines Bügels oder Hängeteils für Kleidungsstücke. Der Haken 8 liegt jeweils an den stirnseitigen Enden des Halterungsteiles 7 auf. Das Halterungsteil 7 ist eine hohlzylindrische Buchse, deren Endbereiche jeweils nach außen durch eine jeweilige Vernietung 24,25 gebogen sind.

Aus den Fig. 1,2 ist der innere Aufbau der erfindungsgemäßen Transportrolle 1 nicht ohne weiteres erkennbar. Dehalb ist in der Fig. 3 die erfindungsgemäße Transportrolle 1 im Schnitt gezeigt. Das zwischen dem ersten Flansch 3 und dem zweiten Flansch 2 befindliche Mittelteil 4 weist einen zum zweiten Flansch 2 gerichteten, einseitig verlängerten Ringsteg 11 des ersten scheibenartigen Flansches 3 mit einer zentralen Bohrung als Durchgangsöffnung 6 einheitlichen Durchmessers auf. Der Ringsteg 11 ist von seiner Anbindung am ersten Flansch 3 bis zu seinem freien, senkrecht zur Mittelachse 4 abgeplatteten Endbereich 20 außenflächig leicht geneigt. Die leicht geneigte Außenfläche des Ringstegs 11 stellt zugleich die Innenlauffläche 12 für die Wälzkörper 13,14 eines Wälzlagers dar. In der Regel ist eine Vielzahl von Wälzkörpern für ein funktionsfähiges Wälzlager notwendig. Die Innenlauffläche 12 besitzt mittig eine umlaufende rillenförmige Vertiefung 18, die maßgerecht den Außenflächen der Wälzkörper 13,14 angepaßt ist und in der sich die Wälzkörper 13,14 bewegen können. Außenseitig umschließt das rotationsfähige Umfangsteil 15 in Form eines Außenrings. die Wälzkörper 13,14 von der Innenlauffläche 12 radial beabstandet und weist eine zur Mittelachse 5 senkrecht abgewinkelte scheibenartige Seitenwandung 21 auf, die sich auf der mit dem kleineren Durchmesser versehenen Seite des Ringstegs 11 befindet. Zur Seite des größeren Ringstegdurchmessers bzw. zum ersten Flansch 3 gerichtet ist der Außenring 15 unter anderem aus Montagegründen vorzugsweise offen. Der Außenring 15 ist mit jeweils einem schlitzbedingten geringfügigen Spiel 16,17 zu den Innenflächen 23,22 des ersten und des zweiten Flansches 3,2 versehen. Der Außenring 15 kann an seiner paraxialen Innenlauffläche 10 ebenfalls eine umlaufende rillenförmige Vertiefung 19 enthalten, die ebenso den Oberflächen der Wälzkörper 13,14 angepaßt ist.

Gegen den freien abgeplatteten Endbereich 20 des Ringsteges 11 ist der zweite scheibenförmige Flansch 2 durch das Halterungsteil 7 fest gehaltert, wobei das Halterungsteil 7 durch eine starre Vernietung 24,25 den zweiten Flansch 2 an den Endbereich 20 des Ringstegs 11 preßt. Durch das hohlzylindrische Halterungsteil 7 ist ein Kanal 26 vorhanden, in den der Haken 8 eines Kleiderbügels eingeführt und soweit durchgeschoben wird, daß die in Fig. 2 gezeigte Position des Hakens 8 erhalten wird.

Im einfachsten Fall (Fig. 1,2) kann der zweite Flansch 2 mit Strichkodierungen 37 versehen sein.

In Fig. 3 besitzt der zweite scheibenförmige Flansch 2 lochartige Aussparungen 27,28, in die anstelle der in Fig. 1,2 gezeigten Strichkodierungen 37 elektrische sowie elektronische Bauelemente aufweisende Kodiereinrichtungen (nicht eingezeichnet) befestigt werden können. Die Kodiereinrichtungen können z.B. radial oder kreisförmig angeordnete induktive, magnetische und/oder kapazitive Einrichtungen oder Stifte eines sich vom Flanschmaterial unterscheidenden Materials sein, um daraus die gespeicherten Informationen entnehmen zu können. Die Aussparungen 27,28 können aber auch eine Ringnut darstellen, in die elektrische Bauelemente gekoppelt mit ROM- und/oder RAM-Speichermodulen eingebracht gehaltert sein können.

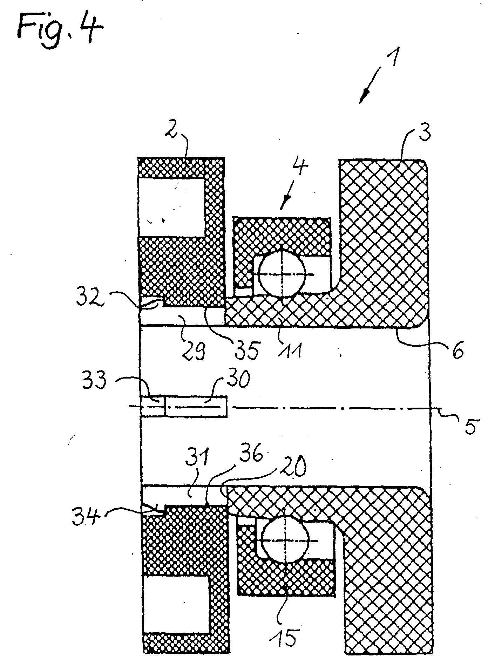

In der Fig. 4 ist der Ringsteg 11 durch Rastelemente darstellende und koaxial geführte, elastische Einfügearme 29,30,31 (stellvertretend für weitere) verlängert, an deren Ende jeweils radial nach außen gerichtete Rastnasen 32,33,34 ausgebildet sind. In dem zweiten Flansch 2 sind dann den Maßen der Einfügearme 29,30,31 angepaßte durchgängige und nach außen gerichtet abgestufte Rastausnehmungen 35,36 vorhanden. Bei der Montage des zweiten Flansches 2 an den freien Endbereich 20 des Ringsteges 11 rasten z.B. die Rastnasen 32,34 durch Gegendruck jeweils in die zugehörigen abgestuften Rastausnehmungen 35,36 ein und halten den zweiten Flansch 2 an dem Endbereich 20 anliegend fest.

Der Zusammenhalt der beiden Flansche 2,3 kann somit neben einer Vernietung mittels des hülsen- oder buchsenartigen, hohlzylindrischen Halterungsteils 7 auch durch die Verrastung über die korrespondierenden Rastelemente z.B. 29,32,35 und 31,34,36 in beiden Flanschen 2,3 erfolgen. Es können auch weitere Möglichkeiten der festen Verbindung zwischen den beiden Flanschen 2,3 vorgesehen sein, z.B. durch Verschraubung zwischen einem außengewindebesitzenden Ringsteg 11 und einem innengewindebesitzenden zweiten Flansch 2.

Die Erfindung ermöglicht es dadurch, daß das rotierende Mittelteil 4 - insbesondere das wälz- oder kugellagergestützte Umfangsteil 15 - von den äußeren Flanschen 2,3, insbesondere an den in Fig. 1,2 gezeigten stoßbezogenen Teilbereichen 38,39 sowie den förderbahnzugeordneten Teilbereichen 40 überragt wird, wobei die äußeren Flansche 2,3 während der Förderung nicht rotieren, sondern in Förderrichtung in gleichbleibender Position bzw. im relativen Ruhezustand sich förderbahngerichtet bewegen. Somit kann bei einem Zusammenstoß zweier benachbarter Transportrollen der Klettereffekt vermieden werden, da sich jeweils die stillstehenden Teilbereiche 38,39 der beiden sich gegenüberstehenden Transportrollen berühren. Dadurch, daß die Flansche 2,3 nicht mehr originär ein Rollenteil im Sinne der bekannten Transportrollen darstellen, ist es möglich, daß in angebrachten Fällen für die Förderanlagen von einer unbedingten Rollenform der Flansche 2,3 abgesehen und eine Form gewählt werden kann, die der Förderanlage angepaßter ist sowie weniger Kosten und Materialaufwand benötigt. Durch die sich ergebende Teilfunktionsänderung vom Rollteil zum Ruheteil der Flansche kann auch der Schwerpunkt der Transportrolle aus der Mittelachse 5 heraus vertikal nach unten verlegt werden, so daß zusätzliche Materialeinsparungen insbesondere an den oberen, nicht benötigten Bereichen der Flansche 2,3 möglich sind. Formenmäßig benötigt werden die in jedem Falle überstehenden Bereiche bzw. Teilbereiche 38,39 im möglichen Stoßbereich zu den sich auf der Förderbahn 9 vor- und/oder nachfolgenden Transportrollen sowie im unteren Seitenführungs-Teilbereich 40 der das Mittelteil 4 tragenden Förderbahnen 9.

In der Regel benötigen herkömmliche Transportrollen im Bereich der Laufflächen eine genau abgestimmte Schmierung mittels Spezialfetten oder -ölen, die in der Regel besonders aufwendige Maßnahmen zur Abdichtung erfordern. Bei der erfindungsgemäßen Transportrolle 1 dagegen reicht durch die geringen Berührungen der Wälzkörper bzw. Kugeln 13,14 im Bereich ihrer Laufflächen 10,12 eine Luftkühlung aus.

Die erfindungsgemäße Transportrolle 1 ist durch ihre nicht rotierenden Flansche 2,3 für das dortige Anbringen von programmfesten oder programmierbaren Kodierungseinrichtungen, wie z.B. Strichkodes oder Chips oder anderer elektrischer bzw. elektronischer Bauelemente oder in Kombination mit ROM oder RAM geeignet, da diese ebenfalls nicht rotieren und somit z.B. ein Lesen, Erkennen von Kodierinformationen während einer Vorbeibewegung einer erfindungsgemäßen Transportrolle 1 an einer Lesestation zuverlässig ermöglichen. Bei entsprechendem Bedarf, d.h., wenn nicht nur Lesestationen in der Förderanlage, sondern auch Schreibstationen vorhanden sind, können sich in dem mindestens eine Kodierungseinrichtungen enthaltenden Flansch auch programmierbare Einrichtungen befinden, in denen die Informationen in dem RAM-Chip des zugehörigen Flansches beim Vorbeibewegen an einer Lese-Schreibstation geändert werden können.

Dadurch, daß bei der erfindungsgemäßen Transportrolle 1 beide zugehörige Flansche 2,3 in gleichbleibender Ruheposition sind, können je nach Bedarf die Kodiereinrichtungen entweder symmetrisch an beiden Flanschen 2,3 angebracht werden oder die Kodiereinrichtungen an und/in den Flanschen 2,3 können sich derart signaltechnisch ergänzen, daß die Maße, insbesondere die Flänschgrößen der Transportrolle 1 auf ein Minimum verringert werden können.

Als Material für die Flansche 2,3 kann Kunststoff, für das rotationsfähige Umfangsteil 15 kann vorzugsweise metallisches Material eingesetzt werden. Die Wälzkörper 13,14 können insbesondere als Metallkugeln ausgebildet sein. Zur Verbesserung der Laufeigenschaften der Wälzkörper 13,14 in den rillenförmigen Vertiefungen 18,19 des Ringsteges 11 bzw. des Außenrings 15 können diese mit laufverbessernden Materialien versehen, insbesondere gespritzt sein.

Die Erfindung eröffnet die Möglichkeit, daß die Transportrolle 1 jeweils am Beginn des Transportvorganges einem Haken 8 oder Bügel zugeordnet werden kann, die nach einem Fördervorgang aus der Transportrolle 1 wieder ausgehängt oder abgenommen werden können. Das ist deshalb vorteilhaft, weil mit der erfindungsgemäßen Transportrolle 1 für den Transport von Kleidungsstükken keinerlei Spezialhaken bzw. -bügel notwendig sind, sondern herkömmliche Bügel mit dem bekannten Drahthaken als Tägerelement 8 verwendet werden können, so daß die Trägerelemente 8 je nach Bedarf auswechselbar sind.

Durch das wälzlager- bzw. kugellagergestützte, auf der Förderbahn 9 rollfähige Mittelteil 4 wird in den inneren Laufflächen 10,12 die Belastung derart verringert, daß gegenüber den wesentlich größere Laufflächen aufweisenden, herkömmlichen Transportrollen eine längere Lebensdauer erreicht werden kann.

### Bezugszeichenliste

- 1: Transportrolle
- 2: zweiter Flansch
- 3: erster Flansch
- 4: Mittelteil
- 5: Mittelachse
- 6: Durchgangsöffnung
- 7: Halterungsteil
- 8: Trägerelement
- 9: Förderbahn
- 10: Innenlauffläche
- 11: Ringsteg
- 12: Innenlauffläche
- 13: Wälzkörper
- 14: Wälzkörper
- 15: Umfangsteil
- 16: Spiel
- 17: Spiel
- 18: erste rillenförmige Vertiefung
- 19: zweite rillenförmige Vertiefung
- 20: freier Endbereich
- 21: scheibenartige Seitenwandung
- 22: Innenfläche
- 23: Innenfläche
- 24: Vernietung
- 25: Vernietung
- 26: Kanal
- 27: Aussparung
- 28: Aussparung
- 29: Einfügearm
- 30: Einfügearm
- 31: Einfügearm
- 32: Rastnase
- 33: Rastnase
- 34: Rastnase
- 35: Rastausnehmung
- 36: Rastausnehmung
- 37: Kodiereinrichtung
- 38: stoßbezogener Teilbereich
- 39: stoßbezogener Teilbereich
- 40: förderbahnzugeordneter Teilbereich

## Patentansprüche

1. Transportrolle (1) für Förderbahnen in Anlagen zum Transport von Objekten, insbesondere von Kleidungsstücken, enthaltend zwei parallel zueinander gerichtet beabstandete, stirnseitige Flansche (2,3) und ein zwischenliegendes Mittelteil (4) sowie eine zwischen den Flanschen (2,3) und dem Mittelteil (4) mittig hindurchführende Durchgangsöffnung (6),
dadurch gekennzeichnet,
daß das Mittelteil (4) mindestens ein periphäres, ringförmiges Umfangsteil (15) aufweist, das separat von beiden Flanschen (2,3) rotationsfähig ist, wobei beide Flansche (2,3) untereinander und mit dem Umfangsteil (15) derart in Verbindung stehen, daß sich bei einer förderbahnauflagebedingten Rotation des Umfangsteils (15) beide Flansche (2,3) in einem von der Rotation unabhängigen Ruhezustand befinden.

2. Transportrolle nach Anspruch 1,
dadurch gekennzeichnet,
daß das Mittelteil (4) mindestens einen zum anderen Flansch (2;3) gerichteten, einseitig verlängerten Ringsteg (11) mindestens eines der beiden Flansche (2,3) mit einem zur Durchgangsöffnung (6) einheitlichen Durchmesser aufweist, wobei das rotationsfähige Umfangsteil (15) wälzlagergestützt den Ringsteg (11) umfaßt.

3. Transportrolle nach mindestens einem der vorhergehenden Ansprüche,
dadurch gekennzeichnet,
daß das Umfangsteil (15) von mindestens einem stoßbezogenen Teilbereich (38,39) und mindestens einem förderbahnzugeordneten Teilbereich (40) der stirnseitigen Flanschen (2,3) überragt ist.

4. Transportrolle nach mindestens einem der vorhergehenden Ansprüche,
dadurch gekennzeichnet,
daß die Flanschen (2,3) scheibenartig sind, die das Umfangsteil (15) zur Förderbahn (9) parallel gerichtet durchmessergrößer rundum überragen.

5. Transportrolle nach mindestens einem der vorhergehenden Ansprüche,
dadurch gekennzeichnet,
daß sich in der Durchgangsöffnung (6) wahlweise zylinderartiges Halterungsteil (7) befindet, das die beiden Flansche (2,5) und das Mittelteil (4) zusammenhält.

6. Transportrolle nach mindestens einem der vorhergehenden Ansprüche,
dadurch gekennzeichnet,
daß das sich in der Durchgangsöffnung (6) befindliche Halterungsteil (7) eine zylindrische Buchse ist, deren Endbereiche zur halternden Vernietung (24,25) der Flansche (2,3) und des Mittelteils (4) jeweils seitlich gebogen sind.

7. Transportrolle nach mindestens einem der vorhergehenden Ansprüche,
dadurch gekennzeichnet,
daß der Ringsteg (11) von seiner Anbindung an einem der beiden Flansche (2,3) jeweils bis zu seinem freien, zur Mittelachse (5) senkrecht abgeplatteten Endbereich (20) außenflächig in Richtung zur Mittelachse (5) geneigt ist.

8. Transportrolle nach mindestens einem der vorhergehenden Ansprüche,
dadurch gekennzeichnet,
daß die geneigte Außenfläche des Ringstegs (11) zugleich die Innenlauffläche (12) für die Wälzkörper (13,14) eines Wälzlagers darstellt.

9. Transportrolle nach mindestens einem der vorhergehenden Ansprüche,
dadurch gekennzeichnet,
daß die Innenlauffläche (12) des Ringstegs (11) mittig zwischen den Innenflächen (22,23) und senkrecht zur Mittelachse (5) gerichtet eine umlaufende rillenförmige Vertiefung (18) besitzt, die maßgerecht den Oberflächen der Wälzkörper (13,14) angepaßt ist und in der sich die Wälzkörper (13,14) bewegen können.

10. Transportrolle nach mindestens einem der vorhergehenden Ansprüche,
dadurch gekennzeichnet,
daß das rotationsfähige Umfangsteil (15) in Form eines Außenrings die Wälzkörper (13,14) außenseitig umschließt.

11. Transportrolle nach mindestens einem der vorhergehenden Ansprüche,
dadurch gekennzeichnet,
daß der Außenring (15) von der Innenlauffläche (12) radial beabstandet mit einer einseitig abgewinkelten scheibenartigen Seitenwandung (21) die Wälzkörper (13,14) haltert, wobei sich die Seitenwandung (21) auf der mit dem kleineren Durchmesser versehenen Seite des Ringstegs (11) befindet.

12. Transportrolle nach mindestens einem der vorhergehenden Ansprüche,
dadurch gekennzeichnet,
daß der Außenring (15) an seiner paraxialen Innenfläche (10) eine senkrecht zur Mittelachse (5) gerichtete, umlaufende rillenförmige Vertiefung (19) besitzt, die den Oberflächen der Wälzkörper (13,14) maßgerecht angepaßt ist.

13. Transportrolle nach mindestens einem der vorhergehenden Ansprüche,
dadurch gekennzeichnet,
daß zur Seite des größeren Ringstegdurchmessers bzw. zum ersten Flansch (3) gerichtet der Außenring (15) offen ist.

14. Transportrolle nach mindestens einem der vorhergehenden Ansprüche,
dadurch gekennzeichnet,
daß zwischen dem Außenring (15) und den Innenflächen (23,22) des ersten und des zweiten Flansches (3,2) jeweils ein schlitzbedingtes geringfügiges Spiel (16,17) vorhanden ist.

15. Transportrolle nach mindestens einem der vorhergehenden Ansprüche,
dadurch gekennzeichnet,
daß gegen den freien abgeplatteten Endbereich (20) des Ringsteges (11) der zweite scheibenförmige Flansch (2) durch das hohlzylindrische Halterungsteil (7) fest gehaltert ist, wobei das Halterungsteil (7) durch die starre Vernietung (24,25) den zweiten Flansch (2) an den abgeplatteten Endbereich (20) preßt und wobei in das einen Kanal (26) aufweisende Halterungsteil (7) ein Haken (8) eines Kleiderbügels einhängbar ist.

16. Transportrolle nach mindestens einem der vorhergehenden Ansprüche,
dadurch gekennzeichnet,
daß der Zusammenhalt der beiden Flansche (2,3) durch eine Verrastung von korrespondierenden Rastelementen (29,32,35; 31,34,36) in beiden Flanschen (2,3) erfolgt.

17. Transportrolle nach mindestens einem der vorhergehenden Ansprüche,
dadurch gekennzeichnet,
daß der Ringsteg (11) durch mehrere an ihm angebundene, Rastelemente darstellende und paraxial gerichtete Einfügearme (29,30,31) verlängert ist, an deren freien Ende jeweils radial gerichtete Rastnasen (32,33,34) ausgebildet sind, wobei in dem zweiten Flansch (2) den Maßen der Einfügearme (29,30,31) angepaßte durchgängige und radial nach außen gerichtet abgestufte Rastausnehmungen (35,36) derart vorhanden sind, daß bei der Montage des zweiten Flansches (2) an dem freien Endbereich (20) des Ringsteges (11) die Rastnasen (32,33,34) jeweils in die zugehörigen abgestuften Rastausnehmungen (35,36) einrasten und den zweiten Flansch (2) an dem Endbereich (20) des ersten Flansches (3) festhalten.

18. Transportrolle nach mindestens einem der vorhergehenden Ansprüche,
dadurch gekennzeichnet,
daß die feste Verbindung zwischen den beiden Flanschen (2,3) durch Verschraubung mittels eines außengewindebesitzenden Ringstegs (11) und eines innengewindebesitzenden zweiten Flanschs (2) erreicht ist.

19. Transportrolle nach mindestens einem der vorhergehenden Ansprüche,
dadurch gekennzeichnet,
daß im Bereich der Laufflächen (12,10) der Wälzkörper bzw.-Kugeln (13,14) zwischen den rillenartigen Vertiefungen (18,19) eine Luftkühlung vorhanden ist.

20. Transportrolle nach mindestens einem der vorhergehenden Ansprüche,
dadurch gekennzeichnet,
daß für die Flansche (2,3) Kunststoff, für das rotationsfähige Umfangsteil (15) metallisches Material eingesetzt und die Wälzkörper (13,14) vorzugsweise als Metallkugeln ausgebildet sind.

21. Transportrolle nach mindestens einem der vorhergehenden Ansprüche,
dadurch gekennzeichnet,
daß die rillenförmigen Vertiefungen. (18,19) des Ringsteges (11) und/oder des Außenrings (15) mit mindestens einem laufverbessernden Material versehen, insbesondere gespritzt sind.

22. Transportrolle nach mindestens einem der vorhergehenden Ansprüche,
dadurch gekennzeichnet,
daß mindestens einer der Flansche (2,3) mindestens eine Kodiereinrichtung (37) enthält, die im und/oder am Flansch (2,3) befestigt ist.

23. Transportrolle nach mindestens einem der vorhergehenden Ansprüche,
dadurch gekennzeichnet,
daß die Flansche (2) lochartige Aussparungen (27,28) besitzen, in denen die Kodiereinrichtungen (37) befestigt sind.

24. Transportrolle nach mindestens einem der vorhergehenden Ansprüche,
dadurch gekennzeichnet,
daß die Aussparungen (27,28) an mindestens einem der Flansche (2,3) als eine Ringnut ausgebildet sind, in und/oder an der die Kodiereinrichtungen (37) befestigt sind.

25. Transportrolle nach mindestens einem der vorhergehenden Ansprüche,
dadurch gekennzeichnet,
daß die Kodiereinrichtungen (37) radial gerichtete und/oder kreisförmig angeordnete induktive, magnetische und/oder kapazitive Einrichtungen und/oder Stifte eines sich vom Flanschmaterial unterscheidenden Materials sind.

26. Transportrolle nach mindestens einem der vorhergehenden Ansprüche,
dadurch gekennzeichnet,
daß die Kodiereinrichtungen (37) als elektronische Bauelemente mit angeschlossenen ROM- und/oder RAM-Speichermodulen ausgebildet sind.

27. Transportrolle nach mindestens einem der vorhergehenden Ansprüche,
dadurch gekennzeichnet,
daß an beiden Flanschen (2,3) je nach Bedarf die Kodiereinrichtungen (37) entweder symmetrisch im Aufbau und in Ausbildung und/oder sich ergänzend vorhanden sind.

28. Transportrolle nach mindestens einem der vorhergehenden Ansprüche,
dadurch gekennzeichnet,
daß die Förderbahn (9) als endlose Rundstahl- oder Kunststoffgestänge bzw. Rohrgestänge oder als endlose Rundriemenanordnung ausgebildet ist.

29. Transportrolle nach mindestens einem der vorhergehenden Ansprüche,
dadurch gekennzeichnet,
daß das Trägerelement (8) vorzugsweise ein herkömmlicher gebogener Haken eines Bügels oder eines Hängeteils für Kleidungsstücke ist.

## Claims

1. Transport roller (1) for use on conveyor tracks in installations for the transport of objects, in particular articles of clothing, comprising two end flanges (2, 3) arranged parallel to one another a certain distance apart with a central component (4) between them, and having a through-going passage (6) that extends centrally between the flanges (2, 3) through the middle of the central component (4),
**characterised in that**
the central component (4) comprises at least one peripheral, annular circumferential component (15) which can rotate separately from the two flanges (2, 3), and the two flanges (2, 3) are connected together and with the circumferential component (15) in such manner that during the rotation of the circumferential component (15) caused by contact with the conveyor track, the two flanges (2, 3) remain at rest independently of the rotation.

2. Transport roller according to Claim 1,
**characterised in that**
the central component (4) comprises at least one annular web (11) extending from one side of at least one of the flanges (2, 3) directed towards the opposite flange (2, 3), and having diameter the same as that of the through-going passage (6), such that the rotating circumferential component (15) surrounds the annular web (11), being supported thereon by a roller bearing.

3. Transport roller according to at least one of the preceding claims,
**characterised in that**
at least one collision-related part-area (38, 39) of the end flanges (2, 3) and at least one part-area (40) thereof associated with the conveyor track extend beyond the circumferential component (15).

4. Transport roller according to at least one of the preceding claims,
**characterised in that**
the flanges (2, 3) are disc-shaped and are directed parallel to the conveyor track (9), having a larger diameter than the circumferential component (15) and so extending beyond it.

5. Transport roller according to at least one of the preceding claims,
**characterised in that**
an optionally cylindrical holding component (7) is present in the through-going passage (6), which holds the two flanges (2, 3) and the central component (4) together.

6. Transport roller according to at least one of the preceding claims,
**characterised in that**
the holding component (7) in the through-going passage (6) is a cylindrical bush whose end areas (24, 25) are each swaged to the sides in order to hold the flanges (2, 3) and the central component (4).

7. Transport roller according to at least one of the preceding claims,
**characterised in that**
the outer surface of the annular web (11) is inclined in the direction of the central axis (5) from its connection to one of the two flanges (2, 3) towards its free, flat end (20) perpendicular to the central axis (5).

8. Transport roller according to at least one of the preceding claims,
**characterised in that**
the inclined outer surface of the annular web (11) is also the inside running surface (12) for the rolling elements (13, 14) of a roller bearing.

9. Transport roller according to at least one of the preceding claims,
**characterised in that**
the inside running surface (12) of the annular web (11) has a circumferential, groove-like recess (18) mid-way between the inside surfaces (22, 23) and perpendicular to the central axis (5), whose size matches the surfaces of the rolling elements (13, 14) and in which the rolling elements (13, 14) can move.

10. Transport roller according to at least one of the preceding claims,
**characterised in that**
the rotating circumferential component (15) encloses the rolling elements (13, 14) in the form of an outer ring.

11. Transport roller according to at least one of the preceding claims,
**characterised in that**
the outer ring (15) is radially a certain distance from the inside running surface (12) and holds the rolling elements (13, 14) by means of an angled disc-like side wall (21) on one side, the said side wall (21) being located on the side of the annular web (11) having the smaller diameter.

12. Transport roller according to at least one of the preceding claims,
**characterised in that**
on its inside surface (10) facing the axis, the outer ring (15) has a circumferential, groove-like recess (19) whose size matches the surfaces of the rolling elements (13, 14).

13. Transport roller according to at least one of the preceding claims,
**characterised in that**
the outer ring (15) is open towards the side where the diameter of the annular web is largest or towards the first flange (3).

14. Transport roller according to at least one of the preceding claims,
**characterised in that**
between the outer ring (15) and the inside surfaces (23, 22) of the first and second flanges (3, 2) there is in each case a slight clearance (16, 17) in the form of a slit.

15. Transport roller according to at least one of the preceding claims,
**characterised in that**
the second disc-shaped flange (2) is held fast by the hollow cylindrical holding element (7) against the free, flat end (20) of the annular web (11), the holding element (7) being firmly swaged at (24, 25) so as to press the second flange (2) against the said flat end (20), and a hook (8) of a clothes hanger can be hung in the holding element (7) which has a channel (26) for the purpose.

16. Transport roller according to at least one of the preceding claims,
**characterised in that**
the two flanges (2, 3) are held together by the interlocking of corresponding detent elements (29, 32, 35; 31, 34, 36) in the two flanges.

17. Transport roller according to at least one of the preceding claims,
**characterised in that**
the annular web (11) is extended by several connecting arms (29, 30, 31) attached to it parallel to the axis and having detent elements, at whose free ends in each case radially directed detent lugs (32, 33, 34) are formed, and in the second flange (2) there are stepped detent recesses (35, 36) matched to the dimensions of the connecting arms (29, 30, 31) and directed radially outwards, such that when the second flange (2) is fitted against the free end area (20) of the annular web (11) each detent lug (32, 33, 34) latches into its associated stepped detent recess (35, 36), holding the second flange (2) securely against the end (20) of the first flange (3).

18. Transport roller according to at least one of the preceding claims,
**characterised in that**
the secure connection between the two flanges (2, 3) is made by screwing a second flange (2) having an internal thread onto an annular web (11) having an outer thread.

19. Transport roller according to at least one of the preceding claims,
**characterised in that**
air cooling is provided in the area of the running surfaces (12, 10) of the rolling elements or balls (13, 14) between the groove-like recesses (18, 19).

20. Transport roller according to at least one of the preceding claims,
**characterised in that**
plastic is used to make the flanges (2, 3), a metallic material is used for the rotating circumferential component (15), and the rolling elements (13, 14) are preferably metal ball-bearings.

21. Transport roller according to at least one of the preceding claims,
**characterised in that**
the groove-like recesses (18, 19) of the annular web (11) and/or the outer ring (15) are provided with at least one material which improves the running properties, in particular a material that is sprayed on.

22. Transport roller according to at least one of the preceding claims,
**characterised in that**
at least one of the flanges (2, 3) comprises at least one coding device (37) attached in and/or on the flange.

23. Transport roller according to at least one of the preceding claims,
**characterised in that**
the flanges have hole-like recesses (27, 28) in which the coding devices are attached.

24. Transport roller according to at least one of the preceding claims,
**characterised in that**
the recesses (27, 28) on at least one of the flanges (2, 3) are formed as an annular groove, in and/or on which the coding devices (37) are fitted.

25. Transport roller according to at least one of the preceding claims,
**characterised in that**
the coding devices (37) are inductive, magnetic and/or capacitative devices and/or pins made of a material different from the flange material, which are directed radially and/or arranged in a circle.

26. Transport roller according to at least one of the preceding claims,
**characterised in that**
the coding devices (37) are in the form of electronic components with connected ROM and/or RAM storage modules.

27. Transport roller according to at least one of the preceding claims,
**characterised in that**
on the two flanges (2, 3), according to need depending on the case, the coding devices (37) are present either as a symmetrical structure and formation and/or as a supplementary addition.

28. Transport roller according to at least one of the preceding claims,
**characterised in that**
the conveyor track is formed as an endless round steel or plastic bar or tubular rod, or as an endless round belt arrangement.

29. Transport roller according to at least one of the preceding claims,
**characterised in that**
the carrier element (8) is preferably a conventional bent hook of a clothes-hanger or a hanging element for articles of clothing.

## Revendications

1. Galet de roulement (1) pour des voies de transport dans des installations destinées à transporter des objets, en particulier des vêtements, contenant deux brides frontales (2, 3) espacées l'une de l'autre et orientées parallèlement l'une à l'autre et une partie médiane intermédiaire (4), ainsi qu'une ouverture de passage (6) traversant le galet en position centrale entre les brides (2, 3) et la partie médiane (4), caractérisé en ce que la partie médiane (4) présente au moins une partie circonférentielle annulaire périphérique (15) qui peut être mise en rotation indépendamment des deux brides (2, 3), les deux brides (2, 3) se trouvant en liaison réciproque et avec la partie circonférentielle (15) de telle sorte que, lors d'une rotation de la partie circonférentielle (15) due à l'application de la voie de transport, les deux brides (2, 3) se trouvent dans un état de repos indépendant de la rotation.

2. Galet de roulement selon la revendication 1, caractérisé en ce que la partie médiane (4) présente au moins une arête annulaire (11) d'au moins une des deux brides (2, 3) à prolongement unilatéral et orientée en direction de l'autre bride (2, 3), possédant un diamètre correspondant à celui de l'ouverture de passage (6), dans lequel la partie périphérique rotative (15) entoure l'arête annulaire (11) en étant supporté par un palier à roulement.

3. Galet de roulement selon au moins une des revendications précédentes, caractérisé en ce que au moins une zone partielle (38, 39) exposée aux chocs et au moins une zone partielle (40) des brides frontales (2, 3), attribuée à la voie de transport font saillie par rapport à la partie circonférentielle (15).

4. Galet de roulement selon au moins une des revendications précédentes, caractérisé en ce que les brides (2, 3) sont réalisées en forme de disque qui font saillie par rapport à la partie circonférentielle (15), sur tout le pourtour, avec un diamètre supérieur et en étant orientée parallèlement à la voie de transport (9).

5. Galet de roulement selon au moins une des revendications précédentes, caractérisé en ce qu'un élément de fixation (7), le cas échéant de forme cylindrique, est disposé dans l'ouverture de passage (6), l'élément de fixation maintenant ensemble les deux brides (2, 3) et la partie médiane (4).

6. Galet de roulement selon au moins une des revendications précédentes, caractérisé en ce que l'élément de fixation (7) disposé dans l'ouverture de passage (6) est une douille cylindrique dont les zones terminales sont pliées latéralement de manière respective pour le maintien par rivetage (24, 25) des brides (2, 3) et de la partie médiane (4).

7. Galet de roulement selon au moins une des revendications précédentes, caractérisé en ce que l'arête annulaire (11) est inclinée sur sa face externe en direction de l'axe médian (5), depuis son point d'attache à une des deux brides (2, 3) respectivement, jusqu'à sa zone terminale libre (20) aplatie perpendiculairement à l'axe médian (5).

8. Galet de roulement selon au moins une des revendications précédentes, caractérisé en ce que la surface externe inclinée de l'arête annulaire (11) représente simultanément la surface de roulement interne (12) pour les corps de roulement (13, 14) d'un palier à roulement.

9. Galet de roulement selon au moins une des revendications précédentes, caractérisé en ce que la surface de roulement interne (12) de l'arête annulaire (11) possède un renfoncement circonférentiel (18) en forme de rainure disposé en position centrale entre les surfaces internes (22, 23) et orienté perpendiculairement à l'axe médian (5), dont la dimension correspond à celle des surfaces des corps de roulement (13, 14) et dans lequel peuvent se déplacer les corps de roulement (13, 14).

10. Galet de roulement selon au moins une des revendications précédentes, caractérisé en ce que la partie circonférentielle rotative (15) entoure la face externe des corps de roulement (13, 14) sous la forme d'un anneau externe.

11. Galet de roulement selon au moins une des revendications précédentes, caractérisé en ce que l'anneau externe (15) maintient les corps de roulement (13, 14) à l'écart de la surface de roulement interne (12), en direction radiale, à l'aide d'une paroi latérale (21) en forme de disque, pliée en U de manière unilatérale, dans lequel la paroi latérale (21) est disposée sur le côté de l'arête annulaire (11) munie du plus petit diamètre.

12. Galet de roulement selon au moins une des revendications précédentes, caractérisé en ce que l'anneau externe (15) possède, sur sa surface interne paraxiale (10) un renfoncement circonférentiel (19) en forme de rainure, orienté perpendiculairement à l'axe médian (5), dont la dimension correspond à celle des surfaces des corps de roulement (13, 14).

13. Galet de roulement selon au moins une des revendications précédentes, caractérisé en ce que l'anneau externe (15) est ouvert en étant orienté vers le côté du plus grand diamètre de l'arête annulaire, respectivement vers la première bride (3).

14. Galet de roulement selon au moins une des revendications précédentes, caractérisé en ce qu'on prévoit entre l'anneau externe (15) et les surfaces internes (23, 22) de la première et de la deuxième brides (3, 2), respectivement un léger jeu (16, 17) dû à une fente.

15. Galet de roulement selon au moins une des revendications précédentes, caractérisé en ce que la deuxième bride (2) en forme de disque est maintenue fermement contre la zone terminale aplatie libre 20 de l'arête annulaire (11), via l'élément de fixation (7) en forme de cylindre creux, dans lequel l'élément de fixation (7) comprime, via le rivetage rigide (24, 25) la deuxième bride (2) contre la zone terminale aplatie (20) et dans lequel un crochet (8) d'un cintre pour vêtement peut venir s'accrocher dans l'élément de fixation (7) présentant un canal (26).

16. Galet de roulement selon au moins une des revendications précédentes, caractérisé en ce que, le fait de maintenir ensemble les deux brides (2, 3) a lieu via un encliquetage d'éléments d'encliquetage correspondants (29, 32, 35 ; 31, 34, 36) dans les deux brides (2, 3).

17. Galet de roulement selon au moins une des revendications précédentes, caractérisé en ce que l'arête annulaire (11) est prolongée par plusieurs bras d'insertion (29, 30, 31) qui sont orientés en direction paraxiale, qui représentant des éléments d'encliquetage et qui lui sont reliés, aux extrémités libres desquels sont réalisés des nez d'encliquetage (32, 33, 34) orientés respectivement en direction radiale, dans lequel des évidements d'encliquetage échelonnés (35, 36) disposés en continu et orientés vers l'extérieur en direction radiale, dont les dimensions correspondent à celles des bras d'insertion (29, 30, 31), sont présents dans la deuxième bride (2) de telle sorte que, lors du montage de la deuxième bride (2), dans la zone terminale libre (20) .de l'arête annulaire (11), les nez d'encliquetage (32, 33, 34) viennent respectivement s'encliqueter dans les évidements d'encliquetage échelonnés correspondants (35, 36) et maintiennent la deuxième bride (2) dans la zone terminale (20) de la première bride (3).

18. Galet de roulement selon au moins une des revendications précédentes, caractérisé en ce qu'on obtient la liaison fixe entre les deux brides (2, 3) par vissage à l'aide d'une arête annulaire (11) possédant un filet externe et d'une deuxième bride (2) possédant un filet interne.

19. Galet de roulement selon au moins une des revendications précédentes, caractérisé en ce que, un refroidissement à air est présent dans la zone des surfaces de roulement (12, 10) des corps de roulement, respectivement des billes (13, 14) entre les renfoncements (18, 19) en forme de rainures.

20. Galet de roulement selon au moins une des revendications précédentes, caractérisé en ce qu'on met en oeuvre, pour les brides (2, 3), une matière synthétique et pour l'élément circonférentiel rotatif (15), une matière métallique, les corps de roulement (13, 14) étant réalisés de préférence sous la forme de billes métalliques.

21. Galet de roulement selon au moins une des revendications précédentes, caractérisé en ce que les renfoncements (18, 19) en forme de rainures de l'arête annulaire (11) et/ou de l'anneau externe (15) sont munis, en particulier par moulage par injection, d'au moins une matière améliorant le roulement.

22. Galet de roulement selon au moins une des revendications précédentes, caractérisé en ce que au moins une des brides (2, 3) contient au moins un mécanisme de codage (37) qui est fixé dans et/ou sur la bride (2, 3).

23. Galet de roulement selon au moins une des revendications précédentes, caractérisé en ce que la bride (2) possède des évidements (27, 28) en forme de trous dans lesquels sont fixés les mécanismes de codage (37).

24. Galet de roulement selon au moins une des revendications précédentes, caractérisé en ce que les évidements (27, 28) sont réalisés, sur au moins une des brides (2, 3), sous la forme d'une rainure annulaire, dans laquelle et/ou sur laquelle sont fixés les mécanismes de codage (37).

25. Galet de roulement selon au moins une des revendications précédentes, caractérisé en ce que les mécanismes de codage (37) sont des mécanismes inductifs, magnétiques et/ou capacitifs orientés en direction radiale et/ou disposés de façon circulaire et/ou représentent des broches d'une matière qui se distingue de la matière des brides.

26. Galet de roulement selon au moins une des revendications précédentes, caractérisé en ce que les mécanismes de codage (37) sont réalisés sous la forme de composants électroniques comprenant des modules de mémoire ROM et/ou RAM qui leur sont raccordés.

27. Galet de roulement selon au moins une des revendications précédentes, caractérisé en ce que, sur les deux brides (2, 3), en fonction des nécessités, les mécanismes de codage (37) sont disposés soit en une structure et en une réalisation symétrique et/ou sont présents sous la forme d'éléments complémentaires.

28. Galet et de roulement selon au moins une des revendications précédentes, caractérisé en ce que la voie de transport (9) est réalisée sous la forme d'une barre sans fin en acier rond ou en matière synthétique, respectivement sous la forme d'une barre tubulaire sans fin ou encore sous la forme d'un agencement sans fin en forme de courroie ronde.

29. Galet de roulement selon au moins une des revendications précédentes, caractérisé en ce que l'élément de support (8) est de préférence un crochet d'un cintre ou d'un élément de suspension pour des vêtements, plié de manière habituelle.
